# EUROPÄISCHE PATENTSCHRIFT

(11) **EP 3 803 522 B1**
(45) Veröffentlichungstag und Bekanntmachung des Hinweises auf die Patenterteilung: **22.11.2023**
(21) Anmeldenummer: 18755726.9
(22) Anmeldetag: 30.07.2018
(51) Int. Cl.: G05B 19/418

(54) **VERFAHREN ZUM HERSTELLEN ODER BEARBEITEN EINES PRODUKTS SOWIE STEUEREINRICHTUNG ZUM STEUERN EINES PRODUKTIONSSYSTEMS**
METHOD FOR PRODUCING OR MACHINING A PRODUCT AND CONTROL DEVICE FOR CONTROLLING A PRODUCTION SYSTEM
PROCÉDÉ DE PRODUCTION OU DE TRAITEMENT D'UN PRODUIT ET DISPOSITIF DE COMMANDE D'UN SYSTÈME DE PRODUCTION

(43) Veröffentlichungstag der Anmeldung: 14.04.2021
(73) Patentinhaber: Siemens Aktiengesellschaft, 80333 München (DE)
(72) Erfinder: FEITEN, Wendelin, 85579 Neubiberg (DE); ALBRECHT, Sebastian, 85399 Hallbergmoos (DE); KAST, Bernd, 89335 Ichenhausen (DE)
(74) Vertreter: Siemens Patent Attorneys
(86) Internationale Anmeldenummer: PCT/EP2018/070614
(87) Internationale Veröffentlichungsnummer: WO 2020/025103

(56) Entgegenhaltungen:
- EP-A1- 3 343 476
- WO-A1-2018/050252
- US-A1- 2007 219 656

## Beschreibung

Zeitgemäße Produktionssysteme zur Herstellung oder Bearbeitung von technischen Produkten weisen in der Regel viele interagierende Produktionsmodule, wie zum Beispiel Roboter, CNC-Maschinen, 3D-Drucker, Reaktoren, Brenner, Heizanlagen oder Förderbänder auf, die eine Vielzahl von Bearbeitungs- und Handhabungsschritten am Produkt ausführen.

Zur Planung eines Produktionsprozesses für ein Produkt sind die Aktionen der Produktionsmodule aufeinander abzustimmen und vorzugsweise hinsichtlich vorgegebener Kriterien zu optimieren. Für moderne Produktionssysteme wird häufig angestrebt, dass möglichst kurzfristig unterschiedliche Produkte oder verschiedene Varianten von Produkten hergestellt oder bearbeitet werden können. Jede Änderung erfordert aber in der Regel eine erneute Abstimmung und Optimierung der erforderlichen Aktionssequenzen für die beteiligten Produktionsmodule.

Zur Unterstützung der Planung sind mittlerweile spezialisierte Planungsprogramme verfügbar, mit denen sich ausgehend von spezifischen Planungsaufgaben geeignete Aktionssequenzen für Produktionsmodule generieren lassen. Derartige Planungsaufgaben lassen sich beispielsweise mittels geeigneter Beschreibungssprachen wie PDDL (Planning Domain Definition Language) oder OWL (Web Ontology Language) in maschinenlesbarer Weise ausdrücken und automatisiert verarbeiten. Die verfügbaren Planungsprogramme sind in der Regel jeweils auf eine vorgegebene Planungsebene oder Planungsdomäne spezialisiert, wie zum Beispiel auf Planungen auf symbolischer Ebene mittels PDDL oder OWL oder auf konkrete Planungen, wie beispielsweise Bewegungsplanungen. Eine automatische, domänenübergreifende Abstimmung oder Optimierung von Aktionssequenzen ist allerdings in der Regel nicht vorgesehen, sondern wird oft manuell durch Experten ausgeführt. Dies ist jedoch, insbesondere bei häufig wechselnden Produkten oder Produktvarianten sehr aufwendig.

US 2007/219656 A1 offenbart ein Verfahren mit einem Empfang einer Benutzereingabe, die einen Satz von Markierungspunkten innerhalb einer modellierten Fertigungsprozessführung und zwischen aufeinanderfolgenden Arbeitsgängen definiert. Die Markierungspunkte definieren einen benutzerdefinierten Punkt innerhalb eines Fertigungsprozesses und umfassen mehrere definierte Typen, z. B. Planungstypen, die eine unterschiedliche Verwendung des Markierungspunkts definieren. Es wird erkannt, wenn während des Betriebs eines Rechenprozesses, der einen modellierten Fertigungsablaufplan verwendet, Markierungspunkte eines bestimmten der definierten Typen im Fertigungsablaufplan definiert wurden.

EP 3 343 476 A1 offenbart ein Verfahren zum rechnergestützten Entwurf eines Produktionsprozesses zum Produzieren eines Produkts in einem vorgegebenen Produktionssystem aus mehreren vorgegebenen technischen Komponenten, welche am Produktionsprozess beteiligt sind, wobei in dem Produktionsprozess Ausgangsprodukte verarbeitet werden, welche zu Teilprodukten und schließlich zu dem Produkt zusammengesetzt werden, wobei:
a) eine digitalen Spezifikation in der Form eines ersten Prozessgraphen eingelesen wird, der Produktionsschritte zum Produzieren des Produkts beschreibt;
b) bestimmt wird, ob der erste Prozessgraph ein Prozessgraph von einem ersten Prozessgraphtyp ist;
c) falls der erste Prozessgraph vom ersten Prozessgraphtyp ist, ein erster Planer ausgeführt wird, der aus dem ersten Prozessgraphen eine erste Sequenz von Basisfunktionen von einem ersten Sequenztyp generiert;
d) ein Reasoner ausgeführt wird, der aus der ersten Sequenz von Basisfunktionen einen zweiten Prozessgraphen von einem zweiten Prozessgraphtyp generiert;
e) ein zweiter Planer ausgeführt wird, der aus dem zweiten Prozessgraphen eine zweite Sequenz von Basisfunktionen von einem zweiten Sequenztyp generiert.

Es ist Aufgabe der vorliegenden Erfindung, ein rechnergestütztes Verfahren zum Herstellen oder Bearbeiten eines Produkts sowie eine Steuereinrichtung zum Steuern eines Produktionssystems anzugeben, mit denen sich ein Planungsaufwand und/oder Produktionsaufwand verringern lässt.

Gelöst wird diese Aufgabe durch ein Verfahren mit den Merkmalen des Patentanspruchs 1, durch eine Steuereinrichtung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Erfindungsgemäß werden zum Herstellen oder Bearbeiten eines Produkts durch ein Produktionssystem, unterschiedlich detaillierte, digitale Strukturangaben über eine Struktur des Produkts oder eines Vorprodukts sowie digitale Bearbeitungsangaben über einen Bearbeitungsprozess des Produkts oder des

Vorprodukts eingelesen. Unter einem Vorprodukt ist hierbei insbesondere eine Vorstufe oder ein Vorzustand des Produkts oder eines Produktteils, ein Ausgangsprodukt, ein Zwischenprodukt, ein Teilprodukt oder ein am Anfang der Fertigung vorliegendes Produktteil oder eine Vorstufe des Produkts, allgemein ein dem fertigen Produkt vorhergehender Produktionszustand zu verstehen. Die Strukturangaben werden dahingehend geprüft, ob eine jeweilige Strukturangabe durch eine jeweilige andere Strukturangabe weiter detailliert wird. Weiterhin werden aus den Strukturangaben und Bearbeitungsangaben mehrere Bearbeitungssequenzen für das Produkt derart generiert, dass eine Strukturangabe aus einer ersten Bearbeitungssequenz durch eine Strukturangabe aus einer zweiten Bearbeitungssequenz weiter detailliert wird. Die erste Bearbeitungssequenz wird dann zu einem ersten Planungsmodul und die zweite Bearbeitungssequenz zu einem zweiten Planungsmodul übermittelt.

Das erste Planungsmodul generiert anhand der ersten Bearbeitungssequenz eine erste Aktionssequenz als ein erstes Planungsergebnis. Das zweite Planungsmodul generiert anhand der zweiten Bearbeitungssequenz sowie unter Berücksichtigung der ersten Aktionssequenz eine zweite Aktionssequenz als ein zweites Planungsergebnis, wobei die erste Aktionssequenz durch das zweite Planungsmodul bei der Generierung der zweiten Aktionssequenz verfeinert wird.

Anhand der vom zweiten Planungsmodul generierten Aktionssequenz werden dann Steuersignale zum Steuern des Produktionssystems generiert und ausgegeben.

Zum Ausführen des erfindungsgemäßen Verfahrens sind eine Steuereinrichtung, ein Computerprogrammprodukt sowie ein computerlesbares Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass durch die Zerlegung des gesamten Planungsproblems in mehrere Sub-Planungsprobleme ein für die Planung erforderlicher Rechenaufwand häufig erheblich reduziert werden kann. In vielen Fällen wird hierdurch eine Planung in Echtzeit während der Fertigung ermöglicht. Dabei kann durch die planungsmodul-übergreifende Berücksichtigung von Planungsergebnissen eine domänenübergreifende Aktionsoptimierung realisiert werden. Darüber hinaus können für eine Produktionsplanung und für eine Produktionssteuerung häufig gleiche Modelle und somit einheitliche Schnittstellen verwendet werden.

Vorteilhafte Ausführungsformen und Weiterbildungen der Erfindung sind in den abhängigen Ansprüchen angegeben.

Gemäß einer vorteilhaften Ausführungsform der Erfindung können die Strukturangaben als Knoten in einem oder mehreren digitalen Strukturgraphen gespeichert werden. Unter einem digitalen Graphen ist hier und im Folgenden insbesondere eine digitale Datenstruktur mit Knoten und als Kanten bezeichneten Verweisen auf Knoten zu verstehen. Ein Strukturgraph kann rekursiv angeben, wie sich ein Produkt oder eine Produktstruktur aus Teilstrukturen zusammensetzt. So kann beispielsweise eine Produktstruktur im Strukturgraphen durch einen Knoten spezifiziert werden, der auf Subknoten verweist, die jeweils eine Teilstruktur dieser Produktstruktur spezifizieren. Ein Strukturgraph kann insbesondere als Baumgraph realisiert sein.

Nach einer weiteren Ausführungsform der Erfindung kann bei der Prüfung, ob eine erste Strukturangabe durch eine zweite Strukturangabe weiter detailliert wird, geprüft werden, ob ein vom Knoten der ersten Strukturangabe ausgehender Teilstrukturgraph einen vom Knoten der zweiten Strukturangabe ausgehenden Teilstrukturgraphen enthält. Alternativ oder zusätzlich kann geprüft werden, ob der Knoten der zweiten Strukturangabe dem Knoten der ersten Strukturangabe in einem Strukturgraphen hinsichtlich seiner Verweisstruktur nachfolgt. Die vorstehenden Prüfungen lassen sich auf einfache Weise implementieren.

Weiterhin können die Strukturangaben jeweils ein Attribut umfassen, das einen Detaillierungsgrad oder Verallgemeinerungsgrad angibt. Die Prüfung, ob eine jeweilige Strukturangabe durch eine jeweilige andere Strukturangabe weiter detailliert wird, kann dann anhand der Attribute erfolgen.

Vorteilhafterweise können die Strukturangaben und die Bearbeitungsangaben jeweils als Knoten in einem digitalen Produktionsgraphen derart gespeichert werden, dass eine jeweilige Strukturangabe, die eine jeweils andere Strukturangabe weiter detailliert, dieser im Produktionsgraphen hinsichtlich seiner Verweisstruktur nachfolgt. Durch einen solchen Produktionsgraphen können Bearbeitungs- und/oder Herstellungsschritte für das Produkt in flexibler Weise auf unterschiedlichen Detaillierungsebenen spezifiziert und organisiert werden.

Vorzugsweise können die Bearbeitungssequenzen jeweils als Teilgraph des Produktionsgraphen generiert werden. Hierzu kann der Produktionsgraph in Teilgraphen segmentiert werden. Nach einer vorteilhaften Ausführungsform der Erfindung können aus den Strukturangaben Zielstrukturangaben selektiert werden, die jeweils einen Zielzustand des Produkts spezifizieren. Die Bearbeitungssequenzen können dann derart generiert werden, dass eine Zielstrukturangabe aus der ersten Bearbeitungssequenz durch eine Zielstrukturangabe aus der zweiten Bearbeitungssequenz weiter detailliert wird. Zu diesem Zweck können Zielstrukturangaben aus verschiedenen Zweigen des Produktionsgraphen verglichen werden und abhängig davon eine Gruppe von Zielstrukturangaben auf unterschiedlichen Detaillierungsebenen selektiert und bereitgestellt werden.

Vorzugsweise kann beim Generieren einer jeweiligen Bearbeitungssequenz, dieser Bearbeitungssequenz ausgehend von einer jeweiligen Zielstrukturangabe sukzessive mindestens eine Strukturangabe und mindestens eine Bearbeitungsangabe zugeordnet werden, durch die eine Überführung mindestens eines Vorprodukts durch mindestens einen Bearbeitungsprozess in den jeweiligen Zielzustand spezifiziert wird.

Die Generierung einer jeweiligen Bearbeitungssequenz kann beendet werden, sobald alle Anfangspunkte der Bearbeitungssequenz nur vorgegebene Ausgangsprodukte umfassen. Auf diese Weise können Bearbeitungssequenzen auf unterschiedlichen Detaillierungsebenen generiert werden, die jeweils einen vollständigen Produktionsweg von den Ausgangsprodukten bis zum Endprodukt spezifizieren.

Nach einer vorteilhaften Weiterbildung der Erfindung kann das Planungsergebnis des zweiten Planungsmoduls anhand eines vorgegebenen Kriteriums bewertet werden. Abhängig von dieser Bewertung kann dann veranlasst werden, dass das erste Planungsmodul eine neue Aktionssequenz generiert und/oder dass eine neue Bearbeitungssequenz generiert wird. Als Kriterium kann beispielsweise ein Zeitbedarf, ein Ressourcenverbrauch, ein Materialverbrauch, ein Verschleiß oder Emissionen des durch das Planungsergebnis bedingten Produktionsablaufs herangezogen werden. Durch eine derartige dynamische Neugenerierung von Aktionssequenzen oder Bearbeitungssequenzen kann die Bearbeitung flexibel an wechselnde Produktionsbedingungen angepasst werden.

Weiterhin kann vorgesehen sein, dass falls ein Planungsmodul oder ein Hardware-Treiber des Produktionssystems einen Fehler meldet, eine neue Bearbeitungssequenz unter Berücksichtigung des Fehlers generiert wird. Auf diese Weise können Fehler im Produktionsablauf in vielen Fällen selbständig vermieden werden.

Nach einer weiteren vorteilhaften Weiterbildung der Erfindung können die generierten Aktionssequenzen jeweils zusammen mit einer zugeordneten Detaillierungsangabe ausgegeben, insbesondere visualisiert werden. Auf diese Weise können aktuelle Planungsergebnisse detaillierungsebenenspezifisch dargestellt werden, wodurch eine Überwachung des Produktionssystems durch einen Benutzer vereinfacht wird.

Ein Ausführungsbeispiel der Erfindung wird nachfolgend anhand der Zeichnungen näher erläutert. Dabei zeigen jeweils in schematischer Abbildung:
- Figur 1: ein Produktionssystem zur Herstellung von Produkten,
- Figur 2: eine erfindungsgemäße Steuereinrichtung beim Steuern eines Produktionssystems,
- Figur 3: einen Strukturgraphen zum Speichern von Strukturangaben über eine Produktstruktur,
- Figur 4: einen Bearbeitungsgraphen zum Speichern von Bearbeitungsangaben über einen Bearbeitungsprozess und
- Figur 5: einen Ausschnitt eines erfindungsgemäßen Produktionsgraphen.

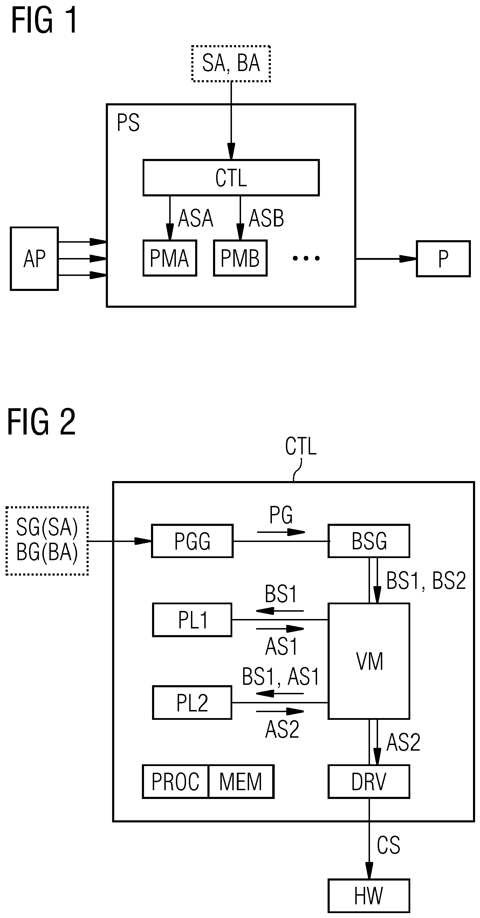

Figur 1 zeigt ein Produktionssystem PS, zum Beispiel eine Fertigungsanlage zur Herstellung von unterschiedlichen Produkten in schematischer Darstellung. Im vorliegenden Ausführungsbeispiel soll durch das Produktionssystem PS ein Produkt P, zum Beispiel ein Motor, ein Kraftfahrzeug, eine Baugruppe, eine elektronische Schaltung, ein Prozessor, ein Werkzeug oder ein anderes mechanisches, chemisches und/oder elektronisches Produkt hergestellt oder bearbeitet werden.

Das Produktionssystem PS verfügt über eine Vielzahl von Produktionsmodulen PMA, PMB, ..., zum Beispiel Roboter, CNC-Maschinen, 3D-Drucker, Reaktoren, Schweißgeräte, Brenner, Heizanlagen oder Förderbänder. Durch die Produktionsmodule PMA, PMB, ... werden Ausgangsprodukte AP, das heißt am Anfang der Fertigung vorliegende und zur Herstellung des Produkts P erforderliche Vorprodukte bearbeitet und/oder zusammengesetzt, um letztlich das Produkt P zu erhalten.

Das Produktionssystem PS verfügt weiterhin über eine Steuereinrichtung CTL zum Steuern der Produktionssystems PS. Die Steuereinrichtung CTL kann als Teil des Produktionssystem PS oder ganz oder teilweise extern zum Produktionssystem PS implementiert sein.

Unter einem Steuern sei hierbei insbesondere ein Ansteuern der Produktionsmodule PMA, PMB, ... oder eines anderen Teils des Produktionssystems PS verstanden, so dass diese eine gewünschte Aktion im Produktionsprozess vornehmen. Darüber hinaus sei unter einem Steuern auch ein Ausgeben und Verwenden von steuerungsrelevanten, das heißt zum Steuern des Produktionssystems beitragenden Daten und Steuersignalen, insbesondere zur Überwachung, Wartung und/oder Betriebsoptimierung des Produktionssystems PS und/oder zur Verschleiß- oder Beschädigungserkennung verstanden.

Zum Steuern der Produktherstellung werden zur Steuereinrichtung CTL digitale Strukturangaben SA über eine Struktur des Produkts P und/oder seiner Vorprodukte sowie digitale Bearbeitungsangaben BA über zur Herstellung des Produkts und/oder seiner Vorprodukte erforderliche Bearbeitungsprozesse übermittelt. Die Strukturangaben SA können eine sogenannte BOM (Bill of Materials) und die Bearbeitungsangaben BA eine sogenannte BOP (Bill of Process) umfassen.

Erfindungsgemäß umfassen die Strukturangaben SA und die Bearbeitungsangaben BA unterschiedlich detaillierte Strukturangaben bzw. Bearbeitungsangaben. Auf diese Weise kann die Herstellung des Produkts P auf unterschiedlichen semantischen Ebenen bzw. Detaillierungsebenen, Abstraktionsebenen oder Verallgemeinerungsebenen spezifiziert werden. Dabei kann eine Produktstruktur oder ein Bearbeitungsprozess einerseits auf einer symbolischen Beschreibungsebene, das heißt mit geringer Detaillierungstiefe mittels symbolischer Beschreibungssprachen wie PDDL oder OWL beschrieben werden. Beispielsweise kann so spezifiziert werden, dass das Produkt einen Grundkörper sowie einen Deckel aufweist, der auf dem Grundkörper zu befestigen ist. Andererseits können detailliertere Strukturangaben die genauen Abmessungen des Grundkörpers und des Deckels spezifizieren sowie eine Position angeben, in der der Deckel auf dem Grundkörper zu befestigen ist. Durch noch weiter detaillierte Strukturangaben SA oder Bearbeitungsangaben BA kann weiter spezifiziert werden, wo welche Bohrungen am Grundkörper bzw. Deckel anzubringen sind, um diesen zu befestigen.

Allgemein gibt eine detailliertere Strukturangabe gegenüber einer weniger detaillierten Strukturangabe mindestens eine weitere Eigenschaft oder Struktur des Produkts an oder verfeinert oder untergliedert eine oder mehrere bereits in der weniger detaillierten Strukturangabe spezifizierten Eigenschaften oder Strukturen. Entsprechend gibt eine detailliertere Bearbeitungsangabe gegenüber einer weniger detaillierten Bearbeitungsangabe mindestens einen weiteren Bearbeitungsschritt an oder verfeinert oder untergliedert einen bereits in der weniger detaillierten Bearbeitungsangabe angegebenen Bearbeitungsschritt. Ob eine vorgegebene Strukturangabe eine andere Strukturangabe weiter detailliert, kann mittels eines Parsers und/oder durch Vergleich von Strukturelementen auf einfache Weise festgestellt werden.

Erfindungsgemäß werden aus den Strukturangaben SA und den Bearbeitungsangaben BA unterschiedlich detaillierte Bearbeitungssequenzen, das heißt Bearbeitungssequenzen auf unterschiedlichen semantischen Ebenen generiert und wie nachfolgend beschrieben, jeweils einem auf die betreffende semantische Ebene spezialisierten Planungsmodul zugeführt.

Anhand der Strukturangaben SA und der Bearbeitungsangaben BA generiert die Steuereinrichtung CTL für jedes der Produktionsmodule PMA, PMB, ... eine spezifische Aktionssequenz ASA, ASB, ..., anhand der das betreffende Produktionsmodul PMA, PMB, ... gesteuert wird.

Figur 2 zeigt in schematischer Darstellung eine erfindungsgemäße Steuereinrichtung CTL beim Steuern eines Produktionssystems. Das Produktionssystem kann dabei wie im Zusammenhang mit Figur 1 beschrieben implementiert sein.

Die Steuereinrichtung CTL verfügt zur Implementierung des erfindungsgemäßen Verfahrens über einen Computer oder Prozessor PROC zum Ausführen aller Verfahrensschritte sowie einen Speicher MEM zum Speichern von im Rahmen des Verfahrens zu bearbeitenden Daten.

Durch die Steuereinrichtung CTL werden unterschiedlich detaillierte digitale Strukturangaben SA über eine Struktur eines herzustellenden Produkts und/oder seiner Vorprodukte sowie unterschiedlich detaillierte digitale Bearbeitungsangaben BA über einen Bearbeitungsprozess des Produkts und/oder seiner Vorprodukte eingelesen. Die Strukturangaben SA und die Bearbeitungsangaben BA können wie im Zusammenhang mit Figur 1 beschrieben ausgestaltet sein.

Im vorliegenden Ausführungsbeispiel werden die Strukturangaben SA in Form von digitalen Strukturgraphen SG und die Bearbeitungsangaben BA in Form von digitalen Bearbeitungsgraphen BG zur Steuereinrichtung CTL übermittelt.

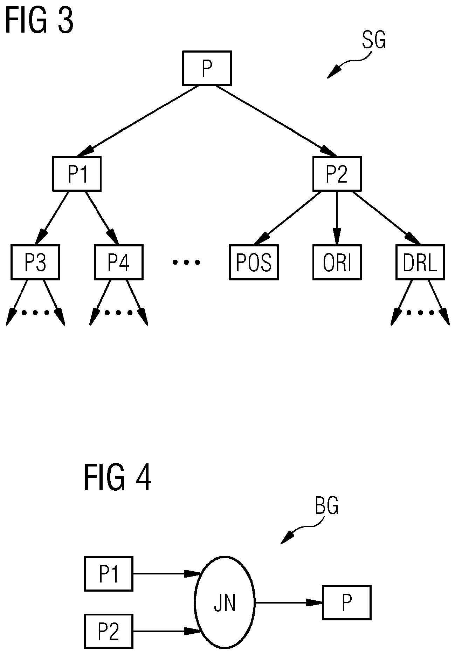

Ein derartiger digitaler Strukturgraph SG zum Speichern von unterschiedlich detaillierten Strukturangaben über eine Struktur eines Produkts oder eines Vorprodukts ist in Figur 3 schematisch dargestellt.

Der Strukturgraph SG ist ein gerichteter Graph mit einer Vielzahl von Knoten und Verweisen auf Subknoten. Der Strukturgraph SG spezifiziert eine Produktstruktur in deklarativer Weise auf unterschiedlichen semantischen Ebenen, Detaillierungsebenen, Abstraktionsebenen, Verallgemeinerungsebenen bzw. in unterschiedlichen Planungsdomänen. Der Strukturgraph SG wird durch eine digitale, verlinkte Datenstruktur, vorzugsweise durch Klasseninstanzen im Sinne der objektorientierten Programmierung implementiert. Die Knoten dieser Datenstruktur umfassen Strukturangaben, die einen jeweiligen Aspekt der Struktur des herzustellenden oder zu bearbeitenden Produkts oder eines Teils davon jeweils auf einer spezifischen semantischen Ebene charakterisieren. Die Strukturangaben des Strukturgraphen SG sind, wie im Zusammenhang mit Figur 1 beschrieben, unterschiedlich detailliert.

Die Knoten des Strukturgraphen SG können auf weitere Knoten verweisen. Diese Verweise bilden die gerichteten Kanten des Strukturgraphen SG. Die Kanten charakterisieren eine Implementierungsbeziehung oder Detaillierungsbeziehung zwischen den Knoten. Die Verweise zeigen dabei jeweils in Richtung größerer Detaillierung. Das heißt ein Verweis von einem eine erste Produktstruktur spezifizierenden Knoten zu einem eine zweite Produktstruktur spezifizierenden Knoten gibt an, dass die zweite Produktstruktur die erste weiter detailliert und/oder eine Substruktur der ersten Struktur bildet.

Die Strukturangaben des Strukturgraphen SG umfassen im vorliegenden Ausführungsbeispiel eine Strukturangabe P über ein herzustellendes Produkt, das heißt über ein Endprodukt bzw. ein Produkt in einem Zielzustand. Die Strukturangabe P bildet damit eine Zielstrukturangabe, die vorzugsweise durch eine Zielinstanz implementiert wird.

Die Strukturangabe P verweist auf Strukturangaben P1 und P2 über Teilprodukte des herzustellenden Produkts. Die Verweise spezifizieren hierbei, dass das Produkt durch die Strukturangaben P1 und P2 über die Teilprodukte weiter detailliert wird. Die Teilprodukte können zum Beispiel ein Grundkörper des Produkts und ein auf dem Grundkörper anzubringender Deckel des Produkts sein.

Weiterhin wird die Strukturangabe P1 durch Strukturangaben P3, P4, ... über weitere Teilprodukte und die Strukturangabe P2 durch Strukturangaben POS, ORI und DRL weiter detailliert, was durch entsprechend gerichtete Kanten repräsentiert wird. Die Strukturangabe POS spezifiziert hierbei eine Zielposition und die Strukturangabe ORI eine Zielorientierung des Teilprodukts P2. Die Strukturangaben POS und ORI können insbesondere Koordinatenangaben und Winkelangaben umfassen. Die Strukturangabe DRL beschreibt ihrerseits ein am Teilprodukt P2 anzubringendes Bohrloch. Auch das Bohrloch ist weiter durch Position, Orientierung und Bohrlochdurchmesser detaillierbar, wofür weitere Verweise auf entsprechende Strukturangaben vorgesehen sein können.

Ein digitaler Bearbeitungsgraph BG zum Speichern von Bearbeitungsangaben über einen Bearbeitungsprozess des herzustellenden Produkts oder eines seiner Vorprodukte ist in Figur 4 schematisch dargestellt.

Der Bearbeitungsgraph BG ist ein gerichteter Graph mit Knoten und Verweisen auf Knoten. Derartige Bearbeitungsgraphen spezifizieren Fähigkeiten des Produktionssystems und der darin ablaufenden Bearbeitungsprozesse. Der Bearbeitungsgraph BG spezifiziert insbesondere prozedurale Beziehungen zwischen Vorprodukten und sich daraus durch einen Bearbeitungsprozess ergebenden Folgeprodukten auf einer spezifischen semantischen Ebene, Detaillierungsebene, Abstraktionsebene, Verallgemeinerungsebene bzw. in einer spezifischen Planungsdomäne. Der Bearbeitungsgraph BG ist durch eine digitale, verlinkte Datenstruktur, vorzugsweise durch Klasseninstanzen implementiert.

Die Knoten dieser Datenstruktur umfassen Bearbeitungsangaben über einen Bearbeitungsprozess, der mindestens ein Vorprodukt in mindestens ein Folgeprodukt überführt, sowie Knoten eines Strukturgraphen, die das mindestens eine Vorprodukt und das mindestens eine Folgeprodukt auf der spezifischen semantischen Ebene der Bearbeitungsangabe charakterisieren. Derartige Bearbeitungsangaben werden häufig auch als Operatoren bezeichnet. Darüber hinaus können im Bearbeitungsgraphen BG auch Angaben über Produktionsmodule, die den betreffenden Bearbeitungsprozess ausführen, als Knoten gespeichert werden.

Die Knoten des Bearbeitungsgraphen BG können auf andere Knoten verweisen. Diese Verweise bilden die gerichteten Kanten des Bearbeitungsgraphen BG, die in Richtung des Produktionsverlaufs oder Produktionsflusses zeigen. Das heißt der Knoten des mindestens einen Vorprodukts verweist auf den Knoten der Bearbeitungsangabe, der wiederum auf den Knoten des mindestens einen Folgenprodukts verweist. Insofern ein Knoten eines Strukturgraphen - wie im Zusammenhang mit Figur 3 bereits erläutert - Verweise auf einen oder mehrere andere Knoten des Strukturgraphen enthalten kann, kann ein Knoten des Strukturgraphen einen ganzen Teilstrukturgraphen repräsentieren. Aus Übersichtlichkeitsgründen sind in Figur 4 indes nur die Ausgangsknoten solcher Teilstrukturgraphen explizit dargestellt.

Der Bearbeitungsgraph BG verknüpft somit Vorprodukte und gegebenenfalls Angaben über Produktionsmodule mit Folgeprodukten und spezifiziert damit insbesondere welche Vorprodukte durch einen jeweiligen Bearbeitungsschritt zu welchen Folgeprodukten führen. Mit anderen Worten: der Bearbeitungsgraph spezifiziert die für einen Bearbeitungsprozess benötigten Vorprodukte sowie die daraus resultierenden Folgeprodukte.

Mittels derartiger Bearbeitungsgraphen können Bearbeitungsprozesse auf unterschiedlichen semantischen Ebenen, Detaillierungsebenen, Abstraktionsebenen, Verallgemeinerungsebenen bzw. in unterschiedlichen Planungsdomänen charakterisiert werden. Zum Beispiel kann auf symbolischer Ebene angegeben werden, dass ein Deckel mit einem Grundkörper zu verbinden ist. Auf subsymbolischer Ebene kann dann weiter detailliert werden, dass Bohrungen mittels eines Bohrers am Deckel und am Grundkörper anzubringen sind, und dass der Deckel mit dem Grundkörper zu verschrauben ist. Durch weitere Bearbeitungsgraphen kann dann weiter detailliert werden, wo genau die Bohrungen und Schrauben anzubringen sind.

In dem durch Figur 4 veranschaulichten beispielhaften Bearbeitungsgraphen BG bildet eine digitale Bearbeitungsangabe JN einen Knoten, der eine Verbindung (englisch: join) von Vorprodukten zu einem zusammengefügten Produkt als Folgeprodukt spezifiziert. Die Vorprodukte werden im vorliegenden Ausführungsbeispiel durch die Teilprodukte P1 und P2 gebildet, die auf den Knoten der Bearbeitungsangabe JN verweisen, der wiederum auf den Knoten P des herzustellenden Produkts als Folgeprodukt verweist. Durch die vorstehende Datenstruktur wird spezifiziert, dass die Teilprodukte P1 und P2 miteinander verbindbar sind, und dass das resultierende verbundene Objekt das Produkt P ist.

Die zur Ausführung des durch die Bearbeitungsangabe, hier JN, spezifizierten Bearbeitungsschritts erforderlichen Strukturangaben über die Vorprodukte oder das oder die Folgeprodukte sind den Strukturgraphen der Vorprodukte und Folgeprodukte hier P1, P2 und P auf der für die Bearbeitungsangabe JN erforderlichen Detaillierungsebene zu entnehmen.

Wie durch Figur 2 weiter veranschaulicht, werden die Strukturgraphen SG und die Bearbeitungsgraphen BG einem Produktionsgraphengenerator PGG der Steuereinrichtung CTL zugeführt. Der Produktionsgraphengenerator PGG generiert aus den Strukturgraphen SG und den Bearbeitungsgraphen BG einen digitalen Produktionsgraphen PG. Der Produktionsgraph PG wird spezifisch für ein aktuell herzustellendes und zu bearbeitendes Produkt sowie für aktuell verfügbare Produktionsmodule des Produktionssystems PS generiert.

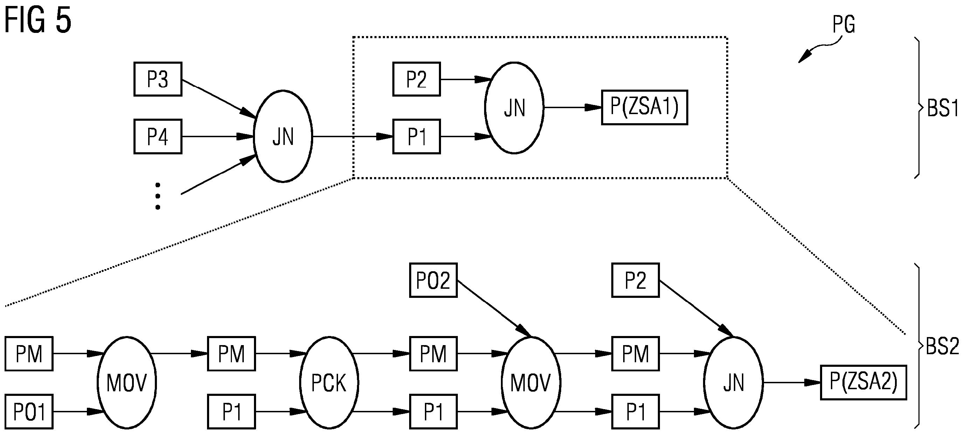

Figur 5 zeigt einen Ausschnitt eines erfindungsgemäßen Produktionsgraphen PG in schematischer Darstellung. Der Produktionsgraph PG ist ein gerichteter Graph mit Knoten und Verweisen auf Knoten oder Teilgraphen, der durch eine verlinkte Datenstruktur, vorzugsweise durch Klasseninstanzen implementiert wird.

Die Knoten dieser Datenstruktur umfassen Knoten von Strukturgraphen und Knoten von Bearbeitungsgraphen, die wie oben beschrieben implementiert sein können. Insofern die Knoten von Strukturgraphen und Bearbeitungsgraphen gegebenenfalls auf andere Knoten verweisen, können die Knoten des Produktionsgraphen PG jeweils einen ganzen Teilstrukturgraphen bzw. Teilbearbeitungsgraphen repräsentieren. Aus Übersichtlichkeitsgründen ist in Figur 5 von derartigen Teilstrukturgraphen bzw. Teilbearbeitungsgraphen jeweils nur ein repräsentativer Knoten dargestellt; das heißt die im Zusammenhang mit Figur 3 beschriebenen und in Richtung feinerer Detaillierung zeigenden Verweise zwischen Knoten von Strukturgraphen sind im Produktionsgraphen PG zwar vorhanden, aber in Figur 5 nicht explizit dargestellt.

Bei der Prüfung, ob ein erster Knoten eines Strukturgraphen einen zweiten Knoten eines Strukturgraphen weiter detailliert, wird festgestellt, ob ein vom ersten Knoten ausgehender Teilstrukturgraph einen vom zweiten Knoten ausgehenden Teilstrukturgraphen enthält und/oder ob der zweite Knoten dem ersten Knoten im Strukturgraphen bzw. Produktionsgraphen PG hinsichtlich einer Verweisstruktur nachfolgt. Dies kann auf einfache Weise mittels eines Parsers und/oder durch Vergleich von Datenstrukturen festgestellt werden. Alternativ oder zusätzlich können Knoten eines Strukturgraphen jeweils ein Attribut umfassen, das einen Detaillierungsgrad, eine semantische Ebene bzw. eine Planungsdomäne angibt. Abhängig von dieser Prüfung wird ein Verweis vom ersten Knoten auf den zweiten Knoten erzeugt. In vielen Fällen kann indes eine Verweisstruktur eines jeweiligen Strukturgraphen für den Produktionsgraphen PG übernommen werden.

Die in Figur 5 dargestellten, zwischen Knoten von Strukturangaben und Knoten von Bearbeitungsangaben verlaufenden Kanten des Produktionsgraphen PG verweisen - wie im Zusammenhang mit Figur 4 erläutert - in Richtung des Produktionsablaufs. Mithin werden die beteiligten Bearbeitungsgraphen bzw. deren Knoten gemäß dem Produktionsablauf verlinkt. In vielen Fällen können diese Verweise von den beteiligten Bearbeitungsgraphen übernommen werden.

Im vorliegenden Ausführungsbeispiel umfasst der Produktionsgraph PG eine Strukturangabe PM über einen Roboterarm als Produktionsmodul des Produktionssystems sowie eine Strukturangabe P über ein herzustellendes oder zu bearbeitendes Produkt. Die Strukturangabe P spezifiziert hierbei einen Zielzustand des Produkts durch unterschiedlich detaillierte Zielstrukturangaben ZSA1 und ZSA2, wobei die Zielstrukturangabe ZSA1 durch die Zielstrukturangabe ZSA2 weiter detailliert wird.

Weiterhin umfasst der Produktionsgraph PG Strukturangaben P1, P2, P3, P4, ... über Teilprodukte des Produkts, die zum Beispiel einen Grundkörper, einen darauf aufzusetzenden Deckel und weitere Teile des Produkts spezifizieren. Ferner enthält der Produktionsgraph PG Strukturangaben PO1 und PO2 über Positionen und/oder Orientierungen des Roboterarms.

Die Bezugszeichen für die Strukturangaben PM, PO1, PO2, P, P1, P2, ... werden im Folgenden auch für die dadurch repräsentierten Produktionsmodule, Positionen, Produkte und Teilprodukte verwendet.

Darüber hinaus umfasst der Produktionsgraph PG Bearbeitungsangaben JN, MOV und PCK über auszuführende Bearbeitungsschritte. Im Einzelnen spezifiziert die Bearbeitungsangabe JN ein Verbinden von Vorprodukten zu einem zusammengesetzten Folgeprodukt, die Bearbeitungsangabe MOV eine Bewegung (englisch: move) des Roboterarms PM zu einer durch eine Strukturangabe, hier PO1 bzw. PO2 spezifizierten Zielposition und die Bearbeitungsangabe PCK ein Aufnehmen (englisch: pick) eines spezifizierten Teilprodukts durch den Roboterarm.

Der Produktionsgraph PG umfasst mehrere digitale Bearbeitungssequenzen auf unterschiedlichen semantischen Ebenen, Detaillierungsebenen Abstraktionsebenen, Verallgemeinerungsebene bzw. Planungsdomänen als Teilgraphen. Aus Übersichtlichkeitsgründen sind in Figur 5 nur zwei beispielhafte Bearbeitungssequenzen BS1 und BS2 schematisch dargestellt.

Die Bearbeitungssequenzen BS1 und BS2 werden jeweils aus Strukturgraphen und Bearbeitungsgraphen als Abfolge von Strukturangaben und Bearbeitungsangaben gebildet. Eine jeweilige Abfolge spezifiziert hierbei auf einer bearbeitungssequenzspezifischen Detaillierungsebene eine Abfolge von Vorprodukten, Operatoren und Folgeprodukten, wobei die Folgeprodukte wiederum als Vorprodukte für einen oder mehrere weitere Operatoren fungieren, solange sie noch nicht das fertige Produkt, hier P, ergeben.

Im vorliegenden Ausführungsbeispiel wird die Bearbeitungssequenz BS1 durch die Bearbeitungssequenz BS2 weiter detailliert. Der gesamte Produktionsgraph PG spezifiziert damit die Bearbeitungs- und/oder Herstellungsschritte für das Produkt P auf unterschiedlichen semantischen Planungsebenen bzw. Detaillierungsebenen.

Die einer höheren, das heißt weniger detaillierten Planungsdomäne zugeordnete Bearbeitungssequenz BS1 spezifiziert ein Verbinden der Teilprodukte P3, P4, ... durch die Bearbeitungsangabe JN zum Teilprodukt P1, sowie dessen Verbinden durch eine weitere Bearbeitungsangabe JN mit dem Teilprodukt P2 zum Endprodukt P. Ein für diese Planungsdomäne zuständiges Planungsmodul kann sich auf dieser Planungsebene zum Beispiel darauf beschränken, geeignete Start- und/oder Zielposen zu finden, die zu keinen Kollisionen führen.

Die in Figur 5 durch ein punktiertes Rechteck hervorgehobene Teilsequenz der Bearbeitungssequenz BS1 wird durch die Bearbeitungssequenz BS2 weiter detailliert. Im vorliegenden Ausführungsbeispiel spezifiziert die Bearbeitungssequenz BS2 eine Bewegung MOV des Roboterarms PM zur Position PO1, eine Aufnahme PCK des Teilprodukts P1, eine Bewegung MOV des Roboterarms PM mit dem Teilprodukt P1 zur Position PO2 sowie eine Verbindung des Teilprodukts P1 mit dem Teilprodukt P2 zum Endprodukt P. Im Unterschied zu den Bearbeitungsangaben der Bearbeitungssequenz BS1 werden durch die Bearbeitungsangaben der Bearbeitungssequenz BS2 konkrete Handhabungen des Roboterarms beim Ausführen eines jeweiligen Bearbeitungsschritts spezifiziert und quantifiziert. Für diese Planungsdomäne kann vorzugsweise ein Planungsmodul eingesetzt werden, das zu Lösung der entsprechenden Planungsaufgabe konkrete kollisionsfreie Trajektorien berechnet.

Oberhalb oder unterhalb der Bearbeitungssequenzen BS1 und BS2 können eine oder mehrere weitere gröbere bzw. feinere Detaillierungsebenen vorgesehen sein. So kann der Produktionsgraph PG zum Beispiel eine weitere, detailliertere Bearbeitungssequenz umfassen, in der die kollisionsfreien Trajektorien zum Beispiel hinsichtlich einer Ausführungsgeschwindigkeit optimiert werden.

Wie durch Figur 2 weiter veranschaulicht, wird der vom Produktionsgraphengenerator PGG generierte Produktionsgraph PG zu einen Bearbeitungssequenzgenerator BSG übermittelt. Letzterer ist an den Produktionsgraphengenerator PGG gekoppelt und selektiert aus dem übermittelten Produktionsgraphen PG mehrere Bearbeitungssequenzen, hier BS1 und BS2.

Zu diesem Zweck werden zunächst im Produktionsgraphen PG die Zielstrukturangaben ZSA1 und ZSA2 selektiert. Die Zielstrukturangaben ZSA1 und ZSA2 spezifizieren einen Zielzustand des Produkts P, das heißt einen Zustand in den das Produkt P durch das Produktionssystem PS zu bringen ist, auf unterschiedlichen semantischen Ebenen, Detaillierungsebenen, Abstraktionsebenen, Verallgemeinerungsebenen bzw. Planungsebenen. Die Selektion der Zielstrukturangaben erfolgt, indem im Produktionsgraphen PG ausgehend von der detailliertesten Zielstrukturangabe, hier ZSA2, schrittweise im zugehörigen Strukturgraphen, hier P, entgegen der Richtung der Kanten zu weniger detaillierten Zielstrukturangaben, hier ZSA1, höher gestiegen wird.

Für jede der so gefundenen Zielstrukturangaben, hier ZSA2 bzw. ZSA1, wird eine Bearbeitungssequenz, hier BS2 bzw. BS1, generiert, wobei die jeweilige Detaillierungsebene oder semantische Ebene der Zielstrukturangabe die Planungsdomäne der jeweils generierten Bearbeitungssequenz festlegt. Das heißt die Planungsdomäne, semantische Ebene bzw. Detaillierungsebene der jeweils resultierenden Bearbeitungssequenz wird gewissermaßen anhand des fertigen Produkts "eingestellt".

Die Generierung einer jeweiligen Bearbeitungssequenz BS1 bzw. BS2 erfolgt, indem im Produktionsgraphen PG ausgehend von der jeweiligen Zielstrukturangabe ZSA1 bzw. ZSA2 auf gleicher Detaillierungsebene sukzessive entgegen der Richtung der Kanten von Folgeprodukten über Bearbeitungsangaben in Richtung der Vorprodukte bis zu den Ausgangsprodukten zurückgegangen wird. Der so durchlaufende Teilgraph des Produktionsgraphen PG wird dann als Bearbeitungssequenz BS1 bzw. BS2 ausgegeben. Die Generierung einer jeweiligen Bearbeitungssequenz BS1 bzw. BS2 wird beendet, sobald alle Ausgangspunkte des bisher durchlaufenden Teilgraphen nur noch Ausgangsprodukte in einem Ausgangszustand umfassen. In diesem Fall enthält eine jeweilige Bearbeitungssequenz BS1 bzw. BS2 einen vollständigen Weg von den Ausgangsprodukten zum Endprodukt.

Vorteilhafterweise kann die Generierung der Bearbeitungssequenzen BS1 und/oder BS2 auch abhängig von aktuellen Produktionsbedingungen, Umgebungsbedingungen und/oder Nebenbedingungen oder abhängig von einer Anzahl von Kanten eines Teilgraphen des Produktionsgraphen PG erfolgen. Hierdurch kann die Produktion in flexibler Weise auf unterschiedliche Produktionsbedingungen abgestimmt werden.

Die Bearbeitungssequenzen BS1 und BS2 werden vom Bearbeitungssequenzgenerator BSG zu einem damit gekoppelten Verteilungsmodul VM übermittelt. Das Verteilungsmodul VM ist an mehrere auf eine jeweilige Planungsdomäne, Detaillierungsebene bzw. semantische Ebene spezialisierte Planungsmodule PL1 und PL2 zur domänenspezifischen Aktionsplanung und Aktionsoptimierung gekoppelt. Die Planungsdomäne des Planungsmoduls PL2 ist hierbei detaillierter als die Planungsdomäne des Planungsmoduls PL1. Der Begriff Planungsdomäne bezeichnet hierbei insbesondere eine semantische Ebene, eine Detaillierungsebene, eine Abstraktionsebene oder eine Verallgemeinerungsebene oder allgemein eine Klasse von digitalen Planungsaufgaben. Das Verteilungsmodul kann in diesem Zusammenhang gewissermaßen als Meta-Planungsmodul aufgefasst werden.

Derartige Planungsmodule werden nachfolgend auch als Planer bezeichnet. Aus Übersichtlichkeitsgründen sind in Figur 2 nur zwei Planer PL1 und PL2 explizit dargestellt. Im Allgemeinen können auch drei oder mehr Planer vorgesehen sein. Zur domänenspezifischen Aktionsplanung ist eine Vielzahl von Planern für unterschiedliche Planungsdomänen verfügbar, zum Beispiel Handlungsplaner, Bewegungsplaner oder Wahrnehmungsplaner.

Das Verteilungsmodul VM übermittelt die Bearbeitungssequenz BS1 an den Planer PL1 und die Bearbeitungssequenz BS2 an den Planer PL2, jeweils im Rahmen einer zu lösenden domänenspezifischen Planungsaufgabe.

Eine Planungsaufgabe umfasst hierbei allgemein eine von einem oder mehreren Ausgangsprodukten oder Ausgangzuständen führende Bearbeitungssequenz zusammen mit einer Beschreibung der zur Ausführung der Bearbeitungssequenz verfügbaren Produktionsmittel und/oder der vorliegenden Produktionsbedingungen. Letztere können zum Beispiel durch Umgebungsdaten, Sensordaten und/oder Nebenbedingungen für den Produktionsprozess spezifiziert oder quantifiziert werden.

Ausgehend von der gestellten Planungsaufgabe versucht der jeweilige Planer eine vorzugsweise nach einem vorgegebenen Kriterium optimierte Aktionssequenz zu finden, die im Rahmen der verfügbaren Produktionsmittel und/oder Produktionsbedingungen vom Ausgangszustand über die Bearbeitungssequenz zum Zielzustand führt. Das vorgegebene Kriterium kann hierbei zum Beispiel einen Zeitbedarf, einen Ressourcenverbrauch, einen Verschleiß und/oder Emissionen des Produktionssystems betreffen.

Eine Aktionssequenz umfasst digitale Steueranweisungen für Komponenten des Produktionssystems, zum Beispiel für Roboter, Förderbänder, Schweißgeräte, Kameras oder andere Produktionsmodule, um einen konkreten Produktionsprozess auszuführen. Eine Aktionssequenz kann insbesondere digitale Steueranweisungen zum Positionieren, Bewegen und/oder Greifen von Roboterarmen, zum Verbinden mehrerer Teilprodukte, zum Bohren, Schleifen oder Schweißen oder zum Steuern anderer Bearbeitungsaktionen umfassen. Falls eine die gestellte Planungsaufgabe lösende Aktionssequenz gefunden wird, wird diese vom jeweiligen Planer als Planungsergebnis zum Verteilungsmodul VM übermittelt.

Das Verteilungsmodul VM ruft die Planer, hier PL1 und PL2, sukzessive mit zunehmendem Detaillierungsgrad auf und übermittelt dabei mit der jeweiligen Planungsaufgabe auch Planungsergebnisse eines vorhergehenden Planers an den nachfolgenden Planer. Auf diese Weise kann die Planung sukzessive von einer abstrakten, symbolischen Planungsebene bis zu einer konkreten Planungsebene verfeinert werden, die alle für die Produktion erforderlichen Details spezifiziert.

Im vorliegenden Ausführungsbeispiel wird durch das Verteilungsmodul VM zuerst der Planer PL1 mit der die Bearbeitungssequenz BS1 umfassenden Planungsaufgabe aufgerufen. Der Planer PL1 versucht infolgedessen in der der Bearbeitungssequenz BS1 zugeordneten Planungsdomäne eine Aktionssequenz AS1 zu finden, durch die die Bearbeitungssequenz BS1 realisiert oder implementiert werden kann. Auf dieser Detaillierungsebene kann die gesuchte Aktionssequenz AS1 zum Beispiel geeignete Start- und Zielposen umfassen, die zu keinen Kollisionen führen und/oder qualitativ angeben, dass ein Deckel auf einen Grundkörper aufzusetzen ist. Die gefundene Aktionssequenz AS1 wird als Planungsergebnis des Planers PL1 von diesem zum Verteilungsmodul VM übermittelt.

Daraufhin wird durch das Verteilungsmodul VM der Planer PL2 mit der die Bearbeitungssequenz BS2 umfassenden Planungsaufgabe aufgerufen, wobei zusätzlich die gefundene Aktionssequenz AS1 zum Planer PL2 übermittelt und bei dessen Planung berücksichtigt wird. Der Planer PL2 versucht infolgedessen in der der Bearbeitungssequenz BS2 zugeordneten Planungsdomäne eine Aktionssequenz AS2 zu finden, durch die die Bearbeitungssequenz BS2 realisiert oder implementiert werden kann. Auf dieser Detaillierungsebene kann die gesuchte Aktionssequenz AS2 abhängig von der Aktionssequenz AS1 beispielsweise konkrete kollisionsfreie Trajektorien für die Aktionssequenz AS1 quantifizieren, wie zum Beispiel die konkreten Bewegungen und Greifaktionen eines Roboterarms zum Aufsetzen des Deckels auf den Grundkörper. Die gefundene Aktionssequenz AS2 wird als Planungsergebnis des Planers PL2 von diesem zum Verteilungsmodul VM übermittelt.

Auf die oben beschriebene Weise wird das Planungsergebnis des Planers PL1 durch das Planungsergebnis des Planers PL2 bei der Generierung seiner Aktionssequenz AS2 verfeinert. Insofern jeder Planer, hier PL1 bzw. PL2, nur seinen eigenen Planungsraum und die Ergebnisse eines jeweils vorhergehenden Planers berücksichtigt, kann eine domänenübergreifende Optimierung realisiert werden, die gegenüber einer globalen Optimierung über alle Planungsräume einen erheblich geringeren Rechenaufwand erfordert.

Falls der Planer PL1 oder PL2 ausgehend von den vorgegebenen Rahmenbedingungen keine Aktionssequenz zur Realisierung der jeweiligen Bearbeitungssequenz finden kann oder einen anderen Fehler feststellt, wird eine entsprechende Fehlerinformation zum Verteilungsmodul VM übermittelt. Durch einen Empfang dieser Fehlerinformation kann das Verteilungsmodul VM dazu veranlasst werden, einen oder mehrere Planer mit einer modifizierten Planungsaufgabe aufzurufen und den obigen Planungsprozess erneut zu durchlaufen. Insbesondere kann dabei ein Planer aufgerufen werden, der einer höheren Planungsdomäne zugeordnet ist, als der Planer, bei dem der Fehler aufgetreten ist. Alternativ oder zusätzlich kann das Verteilungsmodul VM infolge des Empfangs der Fehlerinformation den Bearbeitungssequenzgenerator BSG dazu veranlassen, eine oder mehrere neue Bearbeitungssequenzen, insbesondere mit geringerem Detaillierungsgrad und/oder mit modifizierten Nebenbedingungen zu generieren und mit diesen Bearbeitungssequenzen den Planungsprozess erneut zu durchlaufen.

Die vorstehend beschriebene Neugenerierung von Aktionssequenzen und/oder Bearbeitungssequenzen kann auch abhängig von einer Prüfung der Aktionssequenzen AS2 oder AS1 durch das Verteilungsmodul VM veranlasst werden. Als Prüfungskriterium kann hierbei zum Beispiel ein Zeitbedarf, ein Ressourcenverbrauch, ein Materialverbrauch und/oder ein Verschleiß herangezogen werden, der durch die generierten Aktionssequenzen bedingt wäre.

Das Verteilungsmodul VM prüft weiterhin eine Ausführbarkeit der Aktionssequenz AS2 durch das Produktionssystem. Sobald eine ausführbare Aktionssequenz AS2 vorliegt, werden aus dieser spezifische Aktionssequenzen für die einzelnen beteiligten Produktionsmodule abgeleitet und zu Hardwaretreibern DRV dieser Produktionsmodule übermittelt. Die Hardwaretreiber DRV generieren aus den produktionsmodulspezifischen Aktionssequenzen spezifische Steuersignale CS zum Steuern der spezifischen Produktionsmodule. Die Steuersignale CS werden schließlich von den Hardwaretreibern DRV zu entsprechenden Hardwarekomponenten HW des Produktionssystems übermittelt, um das Produkt P herzustellen.

Durch die Segmentation des Produktionsgraphen PG in Teilgraphen, hier BS1 und BS2, und die anschließende teilgraphenspezifische Aktionsplanung und/oder Optimierung kann ein für die Planung erforderlicher Rechenaufwand erheblich verringert werden. Dies gilt insbesondere, da für viele spezifische Planungsdomänen effiziente und spezialisierte Planungsmodule zur domänenspezifischen Aktionsoptimierung verfügbar sind. Auf diese Weise kann die Produktionsplanung und Produktionsoptimierung in vielen Fällen in Echtzeit während der Fertigung oder Bearbeitung des Produkts P erfolgen.

## Patentansprüche

1. Verfahren zum Herstellen oder Bearbeiten eines Produkts (P) durch ein Produktionssystem (PS), wobei
a) unterschiedlich detaillierte, digitale Strukturangaben (SA) über eine Struktur des Produkts oder eines Vorprodukts sowie digitale Bearbeitungsangaben (BA) über einen Bearbeitungsprozess des Produkts oder des Vorprodukts eingelesen werden,
b) die Strukturangaben (SA) dahingehend geprüft werden, ob eine jeweilige Strukturangabe durch eine jeweilige andere Strukturangabe weiter detailliert wird,
c) aus den Strukturangaben (SA) und Bearbeitungsangaben (BA) mehrere Bearbeitungssequenzen (BS1, BS2) für das Produkt derart generiert werden, dass eine Strukturangabe (ZSA1) aus einer ersten Bearbeitungssequenz (BS1) durch eine Strukturangabe (ZSA2) aus einer zweiten Bearbeitungssequenz (BS2) weiter detailliert wird,
d) die erste Bearbeitungssequenz (BS1) zu einem ersten Planungsmodul (PL1) und die zweite Bearbeitungssequenz (BS2) zu einem zweiten Planungsmodul (PL2) übermittelt werden,
e) das erste Planungsmodul (PL1) anhand der ersten Bearbeitungssequenz (BS1) eine erste Aktionssequenz (AS1) als ein erstes Planungsergebnis generiert,
das zweite Planungsmodul (PL2) anhand der zweiten Bearbeitungssequenz (BS2) sowie unter Berücksichtigung der ersten Aktionssequenz (AS1) eine zweite Aktionssequenz (AS2) als ein zweites Planungsergebnis generiert, wobei
die erste Aktionssequenz (AS1) durch das zweite Planungsmodul (PL2) bei der Generierung der zweiten Aktionssequenz (AS2) verfeinert wird,
f) anhand der vom zweiten Planungsmodul (PL2) generierten Aktionssequenz (AS2) Steuersignale (CS) zum Steuern des Produktionssystems (PS) generiert und ausgegeben werden.

2. Verfahren nach Anspruch 1, **dadurch gekennzeichnet,**
**dass** die Strukturangaben (SA) als Knoten in einem oder mehreren digitalen Strukturgraphen (SG) gespeichert werden.

3. Verfahren nach Anspruch 2, **dadurch gekennzeichnet,**
**dass** bei der Prüfung, ob eine erste Strukturangabe durch eine zweite Strukturangabe weiter detailliert wird, geprüft wird, ob ein vom Knoten der ersten Strukturangabe ausgehender Teilstrukturgraph einen vom Knoten der zweiten Strukturangabe ausgehenden Teilstrukturgraphen enthält, und/oder
ob der Knoten der zweiten Strukturangabe dem Knoten der ersten Strukturangabe in einem Strukturgraphen hinsichtlich seiner Verweisstruktur nachfolgt.

4. Verfahren nach einem der vorhergehenden Ansprüche, **dadurch gekennzeichnet,**
**dass** die Strukturangaben (SA) jeweils ein Attribut umfassen, das einen Detaillierungsgrad angibt, und
**dass** die Prüfung, ob eine jeweilige Strukturangabe durch eine jeweilige andere Strukturangabe weiter detailliert wird, anhand der Attribute erfolgt.

5. Verfahren nach einem der vorhergehenden Ansprüche, **dadurch gekennzeichnet, dass**
die Strukturangaben (SA) und die Bearbeitungsangaben (BA) jeweils als Knoten in einem digitalen Produktionsgraphen (PG) derart gespeichert werden, dass eine jeweilige Strukturangabe, die eine jeweils andere Strukturangabe weiter detailliert, dieser im Produktionsgraphen (PG) hinsichtlich seiner Verweisstruktur nachfolgt.

6. Verfahren nach Anspruch 5, **dadurch gekennzeichnet, dass** die Bearbeitungssequenzen (BS1, BS2) jeweils als Teilgraph des Produktionsgraphen (PG) generiert werden.

7. Verfahren nach einem der vorhergehenden Ansprüche, **dadurch gekennzeichnet,**
**dass** aus den Strukturangaben (SA) Zielstrukturangaben (ZSA1, ZSA2) selektiert werden, die jeweils einen Zielzustand des Produkts (P) spezifizieren, und
**dass** die Bearbeitungssequenzen (BS1, BS2) derart generiert werden, dass eine Zielstrukturangabe (ZSA1) aus der ersten Bearbeitungssequenz (BS1) durch eine Zielstrukturangabe (ZSA2) aus der zweiten Bearbeitungssequenz (BS2) weiter detailliert wird.

8. Verfahren nach Anspruch 7, **dadurch gekennzeichnet, dass** beim Generieren einer jeweiligen Bearbeitungssequenz (BS1, BS2) dieser Bearbeitungssequenz ausgehend von einer jeweiligen Zielstrukturangabe (ZSA1, ZSA2) sukzessive mindestens eine Strukturangabe und mindestens eine Bearbeitungsangabe zugeordnet werden, durch die eine Überführung mindestens eines Vorprodukts durch mindestens einen Bearbeitungsprozess in den jeweiligen Zielzustand spezifiziert wird.

9. Verfahren nach Anspruch 8, **dadurch gekennzeichnet, dass** die Generierung einer jeweiligen Bearbeitungssequenz (BS1, BS2) beendet wird, sobald alle Anfangspunkte der Bearbeitungssequenz nur vorgegebene Ausgangsprodukte umfassen.

10. Verfahren nach einem der vorhergehenden Ansprüche, **dadurch gekennzeichnet, dass** das Planungsergebnis (AS2) des zweiten Planungsmoduls (PL2) anhand eines vorgegebenen Kriteriums bewertet wird und abhängig davon veranlasst wird,
- dass das erste Planungsmodul (PL1) eine neue Aktionssequenz generiert und/oder
- dass eine neue Bearbeitungssequenz generiert wird.

11. Verfahren nach einem der vorhergehenden Ansprüche, **dadurch gekennzeichnet, dass**
falls ein Planungsmodul (PL1, PL2) oder ein Hardware-Treiber (DRV) des Produktionssystems (PS) einen Fehler meldet, eine neue Bearbeitungssequenz unter Berücksichtigung des Fehlers generiert wird.

12. Verfahren nach einem der vorhergehenden Ansprüche, **dadurch gekennzeichnet, dass**
die generierten Aktionssequenzen (AS1, AS2) jeweils zusammen mit einer zugeordneten Detaillierungsangabe ausgegeben werden.

13. Steuereinrichtung (CTL) zum Steuern eines Produktionssystems (PS), eingerichtet zum Ausführen eines Verfahrens nach einem der vorhergehenden Ansprüche.

14. Computerprogrammprodukt eingerichtet zum Ausführen eines Verfahrens nach einem der Ansprüche 1 bis 12.

15. Computerlesbares Speichermedium mit einem Computerprogrammprodukt nach Anspruch 14.

## Claims

1. Method for manufacturing or machining a product (P) by means of a production system (PS), wherein
a) differently detailed, digital structural statements (SA) about a structure of the product or of a precursor and digital machining statements (BA) about a machining process for the product or for the precursor are read in,
b) the structural statements (SA) are checked to determine whether a respective structural statement is provided with further detail by a respective other structural statement,
c) multiple machining sequences (BS1, BS2) for the product are generated from the structural statements (SA) and machining statements (BA) such that a structural statement (ZSA1) comprising a first machining sequence (BS1) is provided with further detail by a structural statement (ZSA2) comprising a second machining sequence (BS2),
d) the first machining sequence (BS1) is transmitted to a first planning module (PL1) and the second machining sequence (BS2) is transmitted to a second planning module (PL2),
e) the first planning module (PL1) uses the first machining sequence (BS1) to generate a first action sequence (AS1) as a first planning result,
the second planning module (PL2) uses the second machining sequence (BS2), and takes into consideration the first action sequence (AS1), to generate a second action sequence (AS2) as a second planning result, wherein
the first action sequence (AS1) is refined by the second planning module (PL2) when generating the second action sequence (AS2),
f) the action sequence (AS2) generated by the second planning module (PL2) is used to generate and output control signals (CS) for controlling the production system (PS).

2. Method according to Claim 1, **characterized in that** the structural statements (SA) are stored as nodes in one or more digital structure graphs (SG).

3. Method according to Claim 2, **characterized**
**in that** the check to determine whether a first structural statement is provided with further detail by a second structural statement involves checking whether a partial structure graph based on the node of the first structural statement contains a partial structure graph based on the node of the second structural statement, and/or
whether the node of the second structural statement succeeds the node of the first structural statement in a structure graph in respect of its reference structure.

4. Method according to one of the preceding claims, **characterized**
**in that** the structural statements (SA) each comprise an attribute that indicates a degree of detailing, and
**in that** the check to determine whether a respective structural statement is provided with further detail by a respective other structural statement is performed on the basis of the attributes.

5. Method according to one of the preceding claims, **characterized**
**in that** the structural statements (SA) and the machining statements (BA) are each stored as nodes in a digital production graph (PG) such that a respective structural statement that provides a respective other structural statement with further detail succeeds said other structural statement in the production graph (PG) in respect of its reference structure.

6. Method according to Claim 5, **characterized**
**in that** the machining sequences (BS1, BS2) are each generated as a partial graph of the production graph (PG).

7. Method according to one of the preceding claims, **characterized**
**in that** target structural statements (ZSA1, ZSA2) that each specify a target state of the product (P) are selected from the structural statements (SA), and
**in that** the machining sequences (BS1, BS2) are generated such that a target structural statement (ZSA1) comprising the first machining sequence (BS1) is provided with further detail by a target structural statement (ZSA2) comprising the second machining sequence (BS2).

8. Method according to Claim 7, **characterized**
**in that** the generating of a respective machining sequence (BS1, BS2) involves this machining sequence being progressively assigned at least one structural statement and at least one machining statement based on a respective target structural statement (ZSA1, ZSA2), said statements specifying a conversion of at least one precursor into the respective target state by means of at least one machining process.

9. Method according to Claim 8, **characterized**
**in that** the generation of a respective machining sequence (BS1, BS2) is terminated as soon as all starting points for the machining sequence comprise only stipulated starting materials.

10. Method according to one of the preceding claims, **characterized**
**in that** the planning result (AS2) of the second planning module (PL2) is rated on the basis of a stipulated criterion and this is taken as a basis for prompting
- the first planning module (PL1) to generate a new action sequence and/or
- a new machining sequence to be generated.

11. Method according to one of the preceding claims, **characterized**
**in that** if a planning module (PL1, PL2) or a hardware driver (DRV) of the production system (PS) reports an error then a new machining sequence is generated taking into consideration the error.

12. Method according to one of the preceding claims, **characterized**
**in that** the generated action sequences (AS1, AS2) are each output together with an associated detailing statement.

13. Control device (CTL) for controlling a production system (PS), configured to carry out a method according to one of the preceding claims.

14. Computer program product configured to carry out a method according to one of Claims 1 to 12.

15. Computer-readable storage medium containing a computer program product according to Claim 14.

## Revendications

1. Procédé de production ou de traitement d'un produit (P) par un système de production (PS), dans lequel
a) différentes indications de structure numériques détaillées (SA) sur une structure du produit ou d'un produit semi-fini ainsi que des indications de traitement numériques (BA) sur un processus de traitement du produit ou du produit semi-fini sont lues,
b) les indications de structure (SA) sont vérifiées pour voir si une indication de structure respective est plus détaillée par une autre indication de structure respective,
c) plusieurs séquences de traitement (BS1, BS2) pour le produit sont générées à partir des indications de structure (SA) et des indications de traitement (BA), de telle sorte qu'une indication de structure (ZSA1) d'une première séquence de traitement (BS1) est plus détaillée par une indication de structure (ZSA2) d'une deuxième séquence de traitement (BS2),
d) la première séquence de traitement (BS1) est transmise à un premier module de planification (PL1) et la deuxième séquence de traitement (BS2) est transmise à un deuxième module de planification (PL2),
e) le premier module de planification (PL1) génère une première séquence d'actions (AS1) en tant qu'un premier résultat de planification, à l'aide de la première séquence de traitement (BS1),
le deuxième module de planification (PL2) génère une deuxième séquence d'actions (AS2) en tant qu'un deuxième résultat de planification, à l'aide de la deuxième séquence de traitement (BS2) ainsi qu'en tenant compte de la première séquence d'actions (AS1), dans lequel
la première séquence d'actions (AS1) est affinée par le deuxième module de planification (PL2) lors de la génération de la deuxième séquence d'actions (AS2),
f) des signaux de commande (CS) pour commander le système de production (PS) sont générés et émis à l'aide de la séquence d'actions (AS2) générée par le deuxième module de planification (PL2) .

2. Procédé selon la revendication 1, **caractérisé en ce que** les indications de structure (SA) sont stockées en tant que noeuds dans un ou plusieurs graphique(s) de structure (SG) numériques.

3. Procédé selon la revendication 2, **caractérisé en ce que** lorsqu'il est vérifié si une première indication de structure est plus détaillée par une deuxième indication de structure, il est vérifié si un graphique de structure partiel partant du noeud de la première indication de structure contient un graphique de structure partiel partant du noeud de la deuxième indication de structure, et/ou
si le noeud de la deuxième indication de structure succède au noeud de la première indication de structure dans un graphique de structure en ce qui concerne sa structure de renvoi.

4. Procédé selon l'une des revendications précédentes, **caractérisé en ce que**
les indications de structure (SA) comprennent respectivement un attribut qui indique un degré de détail, et
que la vérification, si une indication de structure respective est plus détaillée par une autre indication de structure respective, est effectuée à l'aide des attributs.

5. Procédé selon l'une des revendications précédentes, **caractérisé en ce que**
les indications de structure (SA) et les indications de traitement (BA) sont respectivement stockées en tant que noeuds dans un graphique de production numérique (PG) de telle façon qu'une indication de structure respective qui détaille plus une autre indication de structure respective, succède à celle-ci dans le graphique de production (PG) en ce qui concerne sa structure de renvoi.

6. Procédé selon la revendication 5, **caractérisé en ce que** les séquences de traitement (BS1, BS2) sont respectivement générées en tant que graphique partiel du graphique de production (PG) .

7. Procédé selon l'une des revendications précédentes, **caractérisé en ce que**
des indications de structure cible (ZSA1, ZSA2) sont sélectionnées à partir des indications de structure (SA), lesquelles spécifient respectivement un état cible du produit (P), et
que les séquences de traitement (BS1, BS2) sont ainsi générées qu'une indication de structure cible (ZSA1) issue de la première séquence de traitement (BS1) est plus détaillée par une indication de structure cible (ZSA2) issue de la deuxième séquence de traitement (BS2).

8. Procédé selon la revendication 7, **caractérisé en ce que** lorsqu'une séquence de traitement (BS1, BS2) respective est générée, sont attribuées successivement à cette séquence de traitement au moins une indication de structure et au moins une indication de traitement en partant d'une indication de structure cible (ZSA1, ZSA2) respective, par lesquelles un transfert d'au moins un produit semi-fini par au moins un processus de traitement est spécifié dans l'état cible respectif.

9. Procédé selon la revendication 8, **caractérisé en ce que** la génération d'une séquence de traitement (BS1, BS2) respective est terminée dès que tous les points initiaux de la séquence de traitement ne comprennent que des produits de départ prédéfinis.

10. Procédé selon l'une des revendications précédentes, **caractérisé en ce que**
le résultat de planification (AS2) du deuxième module de planification (PL2) est évalué à l'aide d'un critère prédéfini et amené en fonction,
- le premier module de planification (PL1) génère une nouvelle séquence d'actions et/ou
- une nouvelle séquence de traitement est générée.

11. Procédé selon l'une des revendications précédentes, **caractérisé en ce que**
si un module de planification (PL1, PL2) ou un pilote de matériel (DRV) du système de production(PS) signale une erreur, une nouvelle séquence de traitement est générée en tenant compte de l'erreur.

12. Procédé selon l'une des revendications précédentes, **caractérisé en ce que**
les séquences d'action (AS1, AS2) générées sont émises respectivement conjointement avec une indication de détail attribuée.

13. Dispositif de commande (CTL) pour commander un système de production (PS), conçu pour exécuter un procédé selon l'une des revendications précédentes.

14. Produit de programme informatique conçu pour exécuter un procédé selon l'une des revendications 1 à 12.

15. Support de mémoire lisible sur ordinateur comprenant un produit de programme informatique selon la revendication 14.
